Europäisches Patentamt

European Patent Office

Office européen des brevets

(19)

(11) **EP 1 467 304 A1**

(12) **DEMANDE DE BREVET EUROPEEN**

(43) Date de publication:
**13.10.2004 Bulletin 2004/42**

(51) Int Cl.7: **G06F 17/60**

(21) Numéro de dépôt: **04290464.9**

(22) Date de dépôt: **20.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **25.02.2003 FR 0302307**

(71) Demandeur: **FRANCE TELECOM**
**75015 Paris (FR)**

(72) Inventeurs:
• **Nanni, Marco**
  **06330 Roquefort-Les-Pins (FR)**
• **Grohan, Patrick**
  **06140 Vence (FR)**

(74) Mandataire: **Fréchède, Michel et al**
**Cabinet Lavoix**
**2 Place d'Estienne d'Orves**
**75441 Paris Cedex 09 (FR)**

(54) **Procédé et système de rapprochement automatique d'une demande de service et d'un ensemble d'offres de services en ligne**

(57) L'invention concerne un procédé et un système de rapprochement automatique d'une demande de service et d'un ensemble d'offres de services fournies en ligne par des prestataires de services d'un domaine d'activité dans lesquels on établit (A) une base de connaissances ontologique ($OKB_k$) relative à l'ensemble des offres de services comprenant au moins un ensemble de relations $\{R\}$ de proximité et/ou de décomposition applicables entre entités codées de la demande de service et des offres de services, on établit (B) une base de données des offres de services ($SODB_k$) et on exécute (C) un processus d'unification successive de la demande de service et des offres de services pour établir (D) une liste de réponse d'offres de services hiérarchisées selon un indice de rapprochement représentatif de la pertinence de l'offre vis-à-vis de la demande de services.

FIG.1A

EP 1 467 304 A1

## Description

L'invention concerne les processus de rapprochement automatique d'une demande de service et d'un ensemble d'offres de services en ligne.

Les techniques de traitement des demandes de service vis-à-vis d'offres de services en ligne mettent en oeuvre non seulement des techniques de traitement des données mais également de l'information et des connaissances.

A l'heure actuelle, l'évolution de l'organisation des entreprises, favorisée et rendue possible par l'interconnexion en réseau des systèmes d'information, a vu l'avènement de l'entreprise distribuée, de l'entreprise éclatée, de l'entreprise flexible, de l'externalisation, de partenariats et du télétravail.

Cette évolution a pour conséquences l'apparition de nouveaux domaines d'activités où la notion de poste de travail ou d'emploi type n'est plus adaptée au contexte du champ de travail et la nécessité de rassembler des équipes constituées de professionnels capables, pour différents clients, d'intervenir uniquement le temps de la réalisation d'un projet ou d'une partie de ce dernier.

A titre d'exemple, le besoin croissant de trouver un collaborateur pour une durée déterminée et possédant les compétences nécessaires pour réaliser une tâche définie a reçu un élément de réponse par l'utilisation des mécanismes standards d'intermédiation (SSII, Agences d'intérim, "Coachers" (Directeurs de projets)).

Un deuxième élément de réponse a été toutefois envisagé. Ce dernier a pour objet de tirer parti des ressources fournies par l'INTERNET.

En conséquence, les plate-formes actuelles, connectées au réseau INTERNET, permettent d'effectuer, dans le cadre de l'exemple précité, la recherche de prestataires de services, pour une durée déterminée ou indéterminée.

Dans ces conditions, un demandeur construit souvent sa demande en fournissant une liste de compétences et/ou parfois une liste d'objectifs/prestations, assortis éventuellement d'un certain nombre de contraintes diverses, telles que délai, tarif de prestation ou autres.

Pour établir une réponse à une telle demande, la fonction de recherche de la plate-forme filtre dans sa base de données de prestataires ceux qui ont explicitement mentionné un certain nombre de compétences et/ou d'objectifs/prestations parmi ceux demandés et dont l'offre de proposition satisfait à un maximum de contraintes.

Concernant la recherche du meilleur profil prestataire à partir des compétences/résultats demandés, ce processus apparaît d'une efficacité très limitée en termes de précision du rapprochement et de la capacité à traiter des demandes complexes un peu précises.

La présente invention a pour objet la mise en oeuvre d'un procédé et d'un système de rapprochement automatique d'une demande de service et d'un ensemble d'offres de services permettant de remédier à l'ensemble des problèmes précités.

En particulier, la présente invention a pour objet la mise en oeuvre d'un procédé et d'un système de rapprochement automatique d'une demande de service et d'un ensemble d'offres de services en ligne permettant à la fois de tirer parti du réseau INTERNET et de nouveaux protocoles favorisant la mise en place de processus B2B, grâce à la fourniture d'un système d'intermédiation permettant l'activation d'un processus de rapprochement automatique entre demandes et offres de services.

Un autre objet de la présente invention est en outre la mise en oeuvre du procédé et du système de rapprochement automatique précités dans le cadre d'un processus plus global de fourniture modulaire de services à valeur ajoutée, le processus de rapprochement pouvant être assorti d'un processus de négociation en vue de la contractualisation de ces opérations, dans le but de diminuer le coût de transaction global.

Le procédé de rapprochement automatique d'une demande de service et d'un ensemble d'offres de services fournies, en ligne, par des prestataires de services relatifs à un domaine d'activité, objet de la présente invention, la demande de service et les offres de services étant établies chacune selon une description par codage multicritère d'entités codées, est remarquable en ce qu'il consiste à établir une base de connaissances ontologique du domaine d'activité relative à l'ensemble des offres de services de ce domaine d'activité, cette base de connaissances ontologique comportant au moins un ensemble de relations de proximité et/ou de décomposition applicables entre entités codées, à établir une base de données des offres de services relatives à ce domaine d'activité et à exécuter, à partir de la base de connaissances ontologique et de cette base de données des offres de services un processus d'unification successive de cette demande de service et de l'ensemble des offres de services relatives à ce domaine d'activité, pour établir une liste de réponse d'offres de services hiérarchisées selon un indice de rapprochement de cette demande de service et de ces offres de services, cet indice de rapprochement étant représentatif de la pertinence de chaque offre de services vis-à-vis de cette demande de service.

Le système de traitement automatique par rapprochement d'une demande de service et d'un ensemble d'offres de services fournies en ligne par des prestataires de services relatifs à un domaine d'activité, objet de la présente invention, la demande de service et les offres de services étant établies chacune selon une description par codage multicritère d'entités codées, est remarquable en ce qu'il comporte au moins une base de connaissances ontologique relative à une pluralité d'offres de services représentatives d'une pluralité de domaines d'activité, cette base de connaissances ontologique comportant au moins un ensemble de relatives de proximité et/ou de décomposition applicables entre entités codées, une base de données des offres de services fournies par des prestataires de services relatifs à un ou plusieurs domaines d'activités, et, une unité de traitement par unification successive de la demande de service et de l'ensemble des offres de services relations à un même domaine d'activité, pour établir une liste de réponse d'offres de services hiérarchisées selon un indice de rapprochement de cette demande de service et de ces offres de services, cet indice de rapprochement étant représentatif de la pertinence de chaque offre de services vis-à-vis de cette demande de service.

Le procédé et le système objets de l'invention trouvent application à la conduite de processus de rapprochement automatique de demandes de service et d'un ensemble d'offres de services en ligne, quel que soit le domaine d'application des demandes et des offres de services, les processus opératoires de mise en oeuvre du procédé et du système objets de la présente invention intervenant sur des entités codées représentatives d'informations spécifiques à au moins un domaine d'activité, mais indépendamment de la nature de ces informations spécifiques.

Ils seront mieux compris à la lecture de la description et à l'observation des dessins ci-après dans lesquels :

- la figure 1a représente, à titre purement illustratif, un organigramme des étapes essentielles permettant la mise en oeuvre du procédé objet de la présente invention ;
- la figure 1b représente, à titre purement illustratif, un détail de mise en oeuvre de l'étape d'unification d'une requête de demande de service et de l'ensemble des offres de services d'un domaine d'activité donné considéré ;
- la figure 1c représente, à titre purement illustratif, un mode de mise en oeuvre non limitatif du processus d'interprétation d'entités codées de la requête de demande de service et de l'ensemble des offres de services du domaine d'activité considéré, lors de l'exécution de l'étape de parcours du graphe et d'interprétation de la figure 1b ;
- la figure 2 représente, à titre illustratif, un schéma synoptique d'un système de rapprochement automatique d'une demande de service et d'un ensemble d'offres de services en ligne, conforme à l'objet de la présente invention.

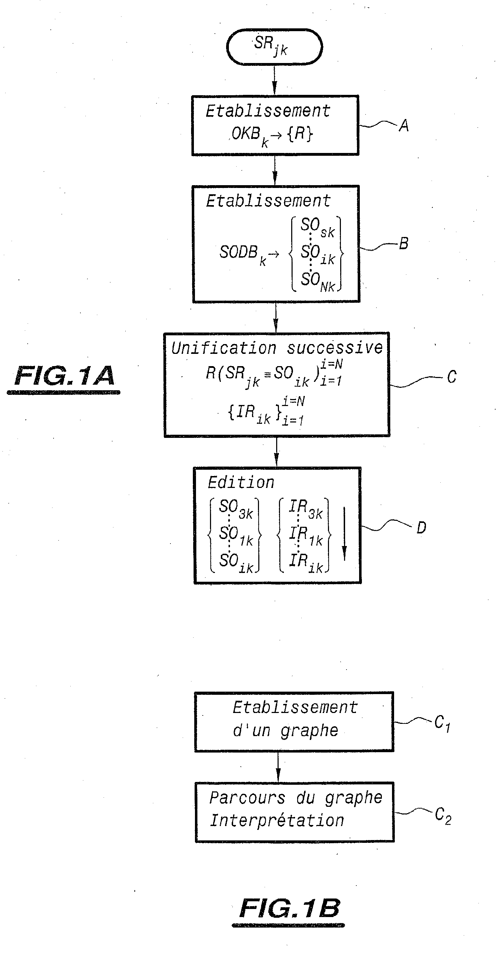

Une description plus détaillée du procédé de rapprochement automatique d'une demande de service et d'un ensemble d'offres de services fournies en ligne par des prestataires de services relatifs à un domaine d'activité, conforme à l'objet de la présente invention, sera maintenant donnée en liaison avec la figure 1a et les figures suivantes.

D'une manière générale, on indique que la demande de service est formulée par l'intermédiaire d'une requête ou demande de service notée $SR_{jk}$ OÙ j désigne une référence du demandeur auteur de la requête ou demande de service et k représente par exemple un domaine d'activités déterminé, dans le cadre duquel la demande de service est présentée.

D'une manière plus spécifique, on indique que la demande de service précitée et les offres de services notée $SO_{ik}$ sont établies chacune selon une description par codage multicritère d'entités codées.

On indique que les entités codées correspondent à des champs de données successifs, chaque champ de données étant représentatif d'un élément descriptif de la demande de service respectivement de chaque offre de services.

En référence à la figure 1a, on indique que le procédé objet de l'invention consiste à une étape A, pour une requête de demande de service $SR_{jk}$, à établir une base de connaissances ontologique du domaine d'activité, cette base de connaissances ontologique étant relative à l'ensemble des offres de services du domaine d'activité considéré.

Selon un aspect particulièrement remarquable du procédé objet de l'invention, on indique que la base de connaissances ontologique, notée $OKB_k$, comporte au moins un ensemble de relations notées {R}, cet ensemble de relations comportant des relations de proximité et/ou de décomposition applicables entre entités codées.

Le procédé objet de l'invention consiste en outre à établir une base de données des offres de services relative au domaine d'activité considéré. Cette étape est réalisée à l'étape B sur la figure 1a. La base de données des offres de service est notée $SODB_k$. Elle est constituée par un ensemble d'offres de services. Chaque offre de services étant notée $SO_{1k}...SO_{ik}...SO_{Nk}$.

Par l'annotation précédente, on comprend que chaque offre de service $SO_{ik}$ correspond par exemple à l'offre de services fournie par le prestataire de services dont la référence ou l'adresse est donnée par l'indice i pour le domaine d'activité k considéré.

A titre d'exemple non limitatif, on indique que les étapes A et B précitées peuvent être mises en oeuvre successivement par exemple, la succession des étapes A et B pouvant être elle-même intervertie.

En particulier, on indique à titre d'exemple non limitatif que pour un domaine d'activité représenté par l'indice k donné, les étapes A et B peuvent être effectuées par appel d'éléments mémorisés d'une base de connaissances ontologique générale relative à une pluralité de domaines d'activité respectivement d'une base de données générale, les éléments mémorisés relatifs au domaine d'activité k étant appelés et chargés par exemple pour constituer la base de connaissances ontologique $OKB_k$, munie des relations R qui lui sont associées, pour le domaine d'activité considéré.

Il en est de même en ce qui concerne la base de données des offres de services $SODB_k$, la base de données relative aux offres de services $SO_{ik}$ relatives au domaine d'activité k pouvant être également chargée à partir d'une base de données générale relative à une pluralité de domaines d'activité.

Outre les étapes A et B précitées le procédé objet de l'invention consiste à exécuter, à une étape C, à partir de la base de connaissances ontologique $OKB_k$ et de la base de données des offres de services $SODB_k$ un processus d'unification successif de la demande de services $SR_{jk}$ et de l'ensemble des offres de services relatives au domaine d'activité $SO_{ik}$ pour établir une liste de réponses d'offres de services hiérarchisées selon un indice de rapprochement de la demande de service et des offres de services.

A l'étape C de la figure 1a, on a représenté l'étape d'unification par la relation symbolique :

$$R \ (SR_{jk} \equiv SO_{ik})_{i=1}^{i=N}$$

En référence à la relation symbolique précitée mise en oeuvre à l'étape C, on indique que grâce au rapprochement des entités codées constitutives de la requête de demande de service $SR_{jk}$ et de chacune des offres de service $SO_{ik}$ et grâce à l'utilisation des règles ou relations R de proximité et/ou de décomposition applicable entre entités codées, l'on obtient pour chaque processus d'unification successive un indice de rapprochement noté $Ip_{ik}$, cet indice étant représentatif de la pertinence de chaque offre de service $SO_{ik}$ vis-à-vis de la demande de service $SR_{jk}$.

Bien entendu, l'étape C peut alors être suivie, au bénéfice du demandeur d'adresse ou référence j correspondant, d'une édition de l'ensemble des offres de service$SO_{ik}$ relative au domaine d'activité considéré, les offres de services précitées pouvant alors avantageusement être classées en fonction de l'indice de rapprochement représentatif de la pertinence de chaque offre de services vis-à-vis de la demande de service $SR_{jk}$.

Sur la figure 1a, on a représenté le classement successif par ordre décroissant de pertinence de chaque offre de service en fonction de la valeur de l'indice de rapprochement de chacune de ces dernières, la flèche dirigée vers le bas symbolisant la valeur décroissante de l'indice de rapprochement pour les indices $IR_{3k} \ IR_{1k} \ ... \ IR_{ik}$ et successivement ainsi que pour les offres de services $SO_{3k}, \ SO_{1k} \ ... \ SO_{ik}$ correspondantes.

Bien entendu, dans le cas où par exemple le nombre d'offres de services révélées n'est pas satisfaisant, le processus de rapprochement peut être relancé, pour la même requête, pour un ou plusieurs domaines d'activité voisins, grâce à l'interprétation de la requête à partir des règles R contenues dans la base de connaissances ontologique.

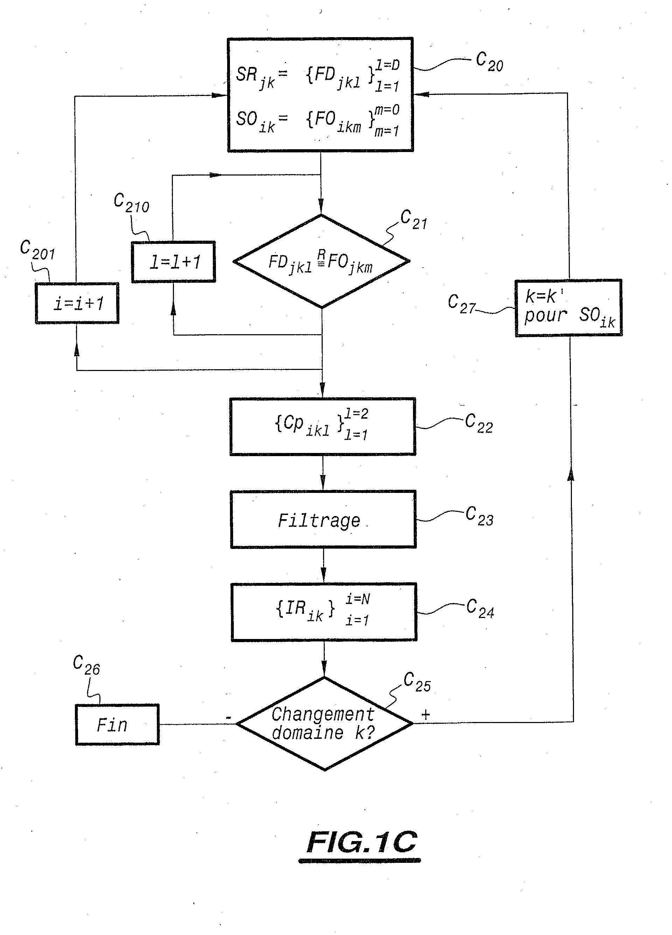

Une description plus détaillée du processus d'unification successive sera maintenant donnée en liaison avec les figures 1b et 1c.

Ainsi qu'on l'a représenté en figure 1b, on indique que le processus d'unification successive consiste, par exemple, à établir à l'étape $C_1$ l'ensemble des entités codées constitutives de chacune des offres de services $SO_{ik}$ pour le domaine d'activité considéré sous forme d'un graphe et à une étape $C_2$ à parcourir le graphe précité selon une stratégie de parcours et à interpréter les entités codées respectives de la demande de service $SR_{jk}$ et de l'offre de services correspondante $SO_{ik}$ à partir de l'ensemble des relations de proximité et/ou de décomposition R de la base de connaissances ontologique $OKB_k$.

A titre d'exemple non limitatif, on indique que la forme du graphe permettant d'assurer le parcours et l'interprétation des entités codées peut être quelconque, le graphe précité pouvant consister en une structure d'arbre équilibré ou autre par exemple.

On comprend en particulier que le parcours du graphe précité peut être effectué par une lecture à l'adresse des noeuds de la structure d'arbres équilibré des entités codées constitutives de chacune des offres de services, ces entités codées correspondant au champ de données précédemment mentionnée dans la description descriptive de l'offre de services pouvant alors être interprétée à au moins l'un des champs de données correspondant constitutif de l'entité codée de la requête de demande de services $SR_{jk}$.

Une description plus détaillée du processus d'interprétation sera maintenant donnée en liaison avec la figure 1c.

En référence à la figure 1c, on considère à une étape de départ $C_{20}$ la requête de demande de service $SR_{jk}$ comme constituée par un ensemble d'entités codées, notées chacune $FD_{jkl}$, où l représente l'adresse de l'entité codée c'est-à-dire du champ de données descriptif de la requête de demande de service et chaque offre de services $SO_{ik}$ comme elle-même formée par un ensemble d'entités codées notées chacune $FO_{ikm}$. Le nombre d'entités codées constitutif de chaque requête de demande de service respectivement de chaque offre de services, c'est-à-dire les nombres l et m sur la figure 1c, peuvent être différents, D désignant le nombre maximum d'entités codées ou de champs descriptifs de la requête de demande de service $SR_{jk}$ et O désignant un nombre maximum d'entités codées ou le champ descriptif de chaque offre de service $SO_{ik}$.

A partir de l'étape $C_{20}$ précitée, le processus d'interprétation peut consister, ainsi que représenté en figure 1c, à comparer une ou plusieurs entités codées respectives de la demande de service $SR_{jk}$ à des entités codées de tout ou partie des offres de service $SO_{ik}$ à partir de la base de connaissances ontologique, c'est-à-dire des relations ou règles de proximité et/ou de décomposition applicable entre entités codées.

Sur la figure 1c et à l'étape $C_{21}$ précitée, l'opération de comparaison, grâce aux relations précitées, est notée symboliquement

$$FD_{jkl} \overset{R}{\cong} FO_{ikm}$$

La relation symbolique précédente indique l'opération de comparaison de chaque champ descriptif de la requête de demande de service avec un champ descriptif correspondant des offres de service et l'interprétation des informations correspondantes de chaque champ, information descriptive de la demande de service respectivement de l'offre de service, conformément aux relations ou règles de proximité et/ou de décomposition applicables entres entités codées.

L'opération d'interprétation est bien entendu réalisée pour chaque entité codée ou champ descriptif I de la requête de demande de service $SR_{jk}$, cette opération étant représentée par l'incrémentation I = I+1 à l'étape $C_{210}$ et le retour à l'opération de comparaison $C_{21}$, l'opération de comparaison étant effectuée bien entendu pour chaque offre de services d'adresse ou référence i, cette opération étant symbolisée par l'incrémentation i = i+1 à l'étape $C_{201}$ et le retour à l'étape $C_{20}$ récursivement.

On comprend en particulier que l'opération de comparaison réalisée à l'étape C21 permet grâce aux règles d'interprétation R d'obtenir pour chaque interprétation, c'est-à-dire chaque comparaison deux à deux des entités codées $FD_{jkl}$ et $FO_{ikm}$ d'obtenir une valeur de coefficient de comparaison notée $Cp_{ikl}$ à l'étape $C_{22}$ de la figure 1c.

A titre d'exemple non limitatif, on indique que les coefficients de comparaison $Cp_{ikl}$ peuvent être un coefficient de valeur comprise entre 0 et 1 par exemple, représentant une valeur de probabilité d'unification de chaque champ descriptif de requête de demande de service et des offres de services réalisée à l'étape $C_{21}$, le nombre de ces coefficients pour une requête de service comportant un nombre d'entités codées compris entre 1 et D étant par exemple égal à celui du nombre d'entités codées représentatif et illustratif de la requête de demande de service $SR_{jk}$ de départ.

Le processus d'interprétation peut alors consister, ainsi que représenté à l'étape $C_{23}$ de la figure 1c, à filtrer les résultats de comparaison, c'est-à-dire des valeurs des coefficients de comparaison $Cp_{ikl}$ correspondant à un coefficient de proximité.

A titre d'exemple non limitatif, on indique que le filtrage précité à l'étape $C_{23}$ peut être réalisé à partir de contraintes environnementales de disponibilité, de ressources, de contexte ou autres, ainsi qu'il sera décrit ultérieurement dans la description.

L'étape $C_{23}$ de filtrage permet alors par une règle de traitement par combinaison linéaire ou autre des coefficients de comparaison obtenus à l'étape $C_{22}$ d'obtenir l'indice de rapprochement $IR_{ik}$ à l'étape $C_{24}$ de la figure 1c.

Enfin, lorsque le résultat donné à l'étape $C_{24}$ n'est pas satisfaisant un test $C_{25}$ de changement de domaine d'activité, référencé k, peut être introduit, pour appeler un domaine d'activité voisin, ainsi que mentionné précédemment dans la description.

Sur réponse négative au test $C_{25}$, un test $C_{26}$ de fin est appelé.

Au contraire, sur réponse positive au test $C_{25}$, un domaine voisin est appelé à l'étape $C_{27}$, la valeur k' et le domaine voisin étant définis à partir de l'interprétation à partir de l'ensemble des règles R. Le retour à l'étape $C_{20}$ permet d'appeler les nouvelles offres de service pour k=k', soit pour le domaine d'activité voisin.

On comprend ainsi que le procédé objet de l'invention peut consister à réitérer le processus d'unification successive sur au moins un domaine d'activité voisin à partir de la base de connaissances ontologique de ce dernier.

D'une manière générale, conformément à un aspect remarquable du procédé objet de la présente invention, les relations de la base de connaissances ontologique, relations pondérées de proximité et relations pondérées de dépendance, sont applicables entre domaines d'activité.

De même, les relations pondérées de proximité et les relations pondérées de dépendance sont applicables entre entités codées de domaines d'activité différents.

Une description qualitative du processus d'unification à partir de règles constitutives de la base de connaissances ontologique sera maintenant donnée ci-après.

Une requête de demande de service et toute offre de services correspondent à la description d'un profil de service, cette description étant réalisée par les champs de données descriptifs constitutifs des entités codées précédemment mentionnées dans la description.

On désigne par prestation de service un objectif, un résultat, un travail, un but et des activités à atteindre ou à fournir par l'intermédiaire d'un prestataire de services.

On désigne par compétence tout moyen permettant de fournir une prestation.

En particulier, les demandes de service et offres de services sont constituées par des entités codées hiérarchisées comprenant au moins une entité codée représentative du type d'activité dans le domaine, une entité codée représentative d'une aptitude d'exercice du type d'activité et une entité codée représentative du niveau de maîtrise dans l'exercice du type d'activité.

De manière plus spécifique, elles comprennent avantageusement

- une entité codée, représentative d'un type d'activité ou d'un type d'objectif dans le domaine d'activité, et/ou
- une entité codée représentative d'une aptitude d'exercice d'une ou de plusieurs activités du domaine d'activité, ou dudit type d'activité si présente, ou représentative d'une aptitude à atteindre un ou plusieurs objectifs du domaine, ou dudit type d'objectif à atteindre si présent.

Les entités codées précitées peuvent alors être organisées avantageusement de façon que :

- Si une entité représentative d'un type d'activité dans le domaine d'activité est présente alors lui est associée une entité codée représentative d'un niveau de maîtrise dans l'exercice du type d'activité.
- Si une entité codée représentative d'une aptitude d'exercice d'une ou de plusieurs activités du domaine d'activité est présente lui est associée une entité représentative du niveau de maîtrise de cette aptitude.

Ainsi, le processus de rapprochement par unification successive est effectué en utilisant différentes stratégies suivant la précision des éléments descriptifs ou entités codées constituant la requête de demande de service.

Grâce aux règles ou relations R contenues dans la base de connaissances ontologique, le ou les résultats de comparaison sont exprimés ou déduits et le ou les profils recherchés peuvent être décomposés en compétence déclarée ou déduite.

Enfin, un profil désigne un ensemble d'éléments, c'est-à-dire d'entités codées ou de champs descriptifs permettant d'être utilisés aussi bien comme un ensemble de critères de recherche dans les ensembles de données ou comme un moyen pour organiser ou partitionner les ensembles précités.

Des indications plus spécifiques relatives aux règles ou relations associées à chaque base de connaissances ontologique seront maintenant données ci-après.

Le processus de rapprochement, c'est-à-dire d'unification successive est bâti autour des règles précitées, lesquelles présentent les caractéristiques essentielles ci-après :

- relations de voisinage entre domaines d'activité ;
- pour tout domaine d'activité quelconque, possibilité d'exprimer le fait qu'une prestation nécessite un ensemble donné de compétences ;
- pour tout domaine d'activité, possibilité d'exprimer le fait qu'une compétence nécessite un sous-ensemble de compétences ;
- pour tout domaine d'activité, possibilité d'exprimer le fait qu'une prestation est proche d'un ensemble de prestations ;
- pour tout domaine d'activité, possibilité d'exprimer le fait qu'une compétence est proche d'un ensemble de compétences ;
- pour tout domaine d'activité, possibilité d'exprimer le fait qu'une prestation se décompose en un ensemble de prestations ;
- pour tout domaine d'activité, possibilité d'exprimer le fait qu'une compétence se décompose en un ensemble de compétences.

Les règles ou relations précédentes peuvent alors être ramenées à deux :

- pour tout domaine d'activité, tout concept membre de la base de connaissances ontologique est susceptible d'être relié à un ensemble de concepts de cette même base de connaissances ontologique par une relation pondérée de dépendance, telle que "Nécessite", "Se décompose", "Dépend de" ou autres. Dans ces conditions, la base de connaissances ontologique comprend un ensemble de relations pondérées de dépendance ;
- pour tout domaine d'activité relatif à la base de connaissances ontologique, tout concept de cette base de connaissances ontologique peut être relié à un ensemble de concepts de cette même base de connaissances ontologique par une relation pondérée de proximité incluant les relations, telles que "Est proche de", "S'exprime" ou autres. Dans ces conditions, la base de connaissances ontologique comprend un ensemble de relations pondérées de proximité.

A titre d'exemple non limitatif, de telles relations peuvent être données par:

- dans le domaine de la création multimédia, la prestation conception/réalisation personnage 3D (tridimensionnelle) peut être décomposée en les compétences ci-après : maquettage, création graphique, réalisation avec une pondération de 1 par exemple. La pondération de 1 indique que chaque compétence a le même poids ou importance ;

- dans le domaine du développement informatique, le langage Java est considéré comme proche du langage C++ avec une pondération de 2, le même langage java est considéré comme proche du langage Pascal avec une pondération de 4, l'échelle des valeurs des coefficients de pondération précités indiquant, ainsi qu'il est connu, que le langage C++ est plus proche du langage Java que ne l'est le langage Pascal.

Le principe sur lequel repose le processus d'unification successive à partir des relations précitées permet alors de traiter des demandes de service non limitées au contexte d'un seul service ainsi qu'il sera décrit sur des exemples spécifiques ci-après.

L'exemple donné ci-après concerne, à titre non limitatif, une demande de service dans le domaine de la création multimédia.

Dans ces conditions, une demande de service type peut être définie à partir d'un ensemble de critères, c'est-à-dire de champs descriptifs ou entités codées, tels que date de début de mission, durée de la mission, tarification proposée, contraintes de mobilité, lieu de travail, métier, niveau d'études, nombre d'années d'expérience, formation demandée, domaine d'activité, compétences nécessaires, compétences souhaitées, niveau de maîtrise, résultats à fournir, etc.

A titre d'exemple non limitatif, on indique que l'on prend en compte un seul profil recherché, exprimé en termes de métier recherché et/ou de compétences nécessaires respectivement souhaitées et/ou d'objectifs exprimés en termes de résultats à fournir.

On dispose d'un extrait des règles ou relations associées à la base de connaissances ontologique $OKB_k$ précédemment citée selon le tableau A relatif au domaine multimédia par exemple :

---

## Tableau A

- Directeur Artistique "EstProcheDe" Réalisateur ( [1]indice de proximité noté $ip_1$ - = **1**)

- Réalisateur "EstProcheDe" Chef De Projet Multimedia ($ip_2$ = **1** )

- Directeur Artistique "EstProcheDe" Graphiste Confirmé ($ip_3$ - = **1**)

- Personnage 3d "SeDécompose" CréationPersonnage

- Personnage 3d "SeDécompose" Maquettage

- Personnage 3d "SeDécompose" Animation3D

- CréationPersonnage "FaitAppel" GraphisteCrea

- Maquettage "FaitAppel" Maquettiste

- Animation3D "FaitAppel" Infographiste

---

A l'observation du tableau précité, on comprend que l'ensemble de relations pondérées de proximité de la base de connaissances ontologique comprend au moins :

- une relation sémantique "Est Proche De" permettant d'établir le caractère fonctionnel voisin de deux entités codées età laquelle peut être associée un indice de proximité représentatif du niveau de proximité de deux entités codées mises en relation par la relation sémantique précitée.

Dans le tableau précédent, les indices de proximité sont notés $ip_1$ à $ip_3$.

En outre, l'on peut observer également que l'ensemble de relations pondérées de dépendance comprend au moins les relations sémantiques, telles que :

- "Se décompose" permettant d'établir un lien de causalité fonctionnelle descendante entre deux entités codées ;
- "Fait appel" permettant d'établir un lien de causalité fonctionnelle ascendante entre deux entités codées ;
- "Nécessite" permettant d'établir un lien de causalité fonctionnelle ascendante impérative entre deux entités codées.

En outre, le tableau B ci-après représente une pluralité d'offres de services successives $SO_{ik}$, le nombre d'offres de services dans le tableau précité étant volontairement limité à 5.

---

## Tableau B

- Offre1 contient : **métier** Chef De Projet Multimédia  **compétence** : management **niveau de maîtrise** : expert

- Offre2 contient : **métier** Graphiste **niveau de maîtrise** : confirmé **compétence** : créatif  **niveau de maîtrise** : expert

- Offre3 contient : **métier** Maquettiste débutant

- Offre4 contient : **métier** ConcepteurRédacteur

- Offre5 contient : **métier** Infographiste 3D

---

Deux exemples de mise en oeuvre du processus de rapprochement de toute demande de service avec des offres de services proposées en ligne seront maintenant donnés ci-après, relativement à la recherche d'un métier respectivement d'un résultat à fournir dans un domaine d'activité.

- Recherche sur un métier

Le demandeur émetteur de la demande de service recherche par exemple un **Directeur Artistique** dans le cadre de la création d'un CD interactif tel qu'un support de jeu vidéo par exemple.

En fait, pour la mise en oeuvre d'une telle création assez complexe, l'éditeur préposé du demandeur par exemple souhaite que l'intervenant dispose d'une compétence en matière de management, compétence de haut niveau en sus de la compétence de créativité qui lui est propre.

Bien entendu, la demande de service est formalisée et codée par l'intermédiaire d'une interface homme/machine IHM et d'un système d'information et permet de fournir les critères de recherche ci-après selon le tableau C :

---

## Tableau C

| **Métier** | : | Directeur Artistique |
| --- | --- | --- |
| **Compétence souhaitée** : | | Management  **niveau de maîtrise** : confirmé |
| | | **nombre de personnes à encadrer** : 12 |

---

Le processus de rapprochement par unification successive conforme au procédé objet de la présente invention sera maintenant décrit en ne prenant en compte que le critère métier, afin de montrer le mécanisme général du processus de rapprochement par unification successive.

En référence au tableau B précédent, on constate que une offre de service contenant le métier de **Directeur Artistique** n'est pas présente dans les offres de services constitutives du domaine d'activité.

Le processus de rapprochement utilise alors les connaissances disponibles dans la base de connaissances ontologique et en particulier dans les règles R constitutives de celle-ci.

Le procédé objet de l'invention permet alors de parcourir le graphe correspondant aux offres de services et au tableau A des règles R et extrait des connaissances ci-après en n'utilisant pour l'exemple donné que la relation de proximité entre métiers.

Le processus calcule alors un indice de proximité pour chacun des métiers recherchés par rapport au métier cible **Directeur Artistique** de la manière ci-après :

- le métier **Directeur Artistique** est proche du métier **Réalisateur** avec une proximité de 1 ;
- le métier **Réalisateur** est proche du métier **Chef de Projet Multimédia** avec une proximité de 1, donc le métier **Chef de Projet Multimédia** a une proximité vis-à-vis du métier de **Directeur Artistique** donnée par le coefficient de proximité $Cp_{ikl}$ égal à 1 +1 = 2, $(ip_1 + ip_2)$ ;
- le métier **Directeur Artistique** est proche du métier **Graphiste confirmé** avec une proximité de 1, $(ip_3 = 1)$.

Dans l'exemple précité, le coefficient de proximité est le seul critère utilisé pour le calcul de l'indice de rapprochement $IR_{ik}$.

L'opération de filtrage a ainsi permis de sélectionner deux offres de services selon le tableau D ci-après.

## Tableau D

| Offreur de services proposant | $SO_{2k}$ | avec $IR_{2k} = 1$ |
|---|---|---|
| Offreur de services proposant | $SO_{1k}$ | avec $IR_{1k} = 2$ |

D'après le tableau, la réponse fournie au demandeur de service comprend les deux offres de services classées en fonction de la valeur des indices de rapprochement calculés.

On rappelle que k désigne une référence au domaine d'activité pour les offres de services et la demande de service considérée.

L'offre de service n° 2 $SO_{2k}$ est donnée en premier car les règles d'ontologie R ont exprimé le fait qu'en général un **Graphiste Confirmé** est plus proche d'un **Directeur Artistique** qu'un **Chef de Projet Multimédia**.

Dans la pratique, le processus de rapprochement est susceptible de prendre en compte un deuxième critère demandé, tel que la demande d'une compétence nécessaire en matière de management.

Dans cette situation, le mécanisme de rapprochement permet de vérifier que le **Chef de Projet Multimédia** dispose d'un bon niveau de maîtrise en gestion et qu'en particulier, ce dernier avait conduit un projet composé d'au moins dix personnes dans l'une des missions qui lui ont été confiées, ces informations étant disponibles par exemple en parcourant la description de l'expérience professionnelle de l'offreur ou prestataire de services codée par l'intermédiaire d'entités codées ainsi que mentionné précédemment dans la description.

La possession de telles compétences est alors prise en compte pour le calcul de l'indice de rapprochement $IR_{ik}$. Ce calcul peut être effectué par combinaison linéaire pondérée ou non ou toute autre relation mathématique entre les coefficients respectifs ainsi que mentionnés précédemment dans la description.

Le demandeur de service est alors en mesure de contacter les deux prestataires de services précités par l'intermédiaire de leur adresse ou référence i pour, le cas échéant, négocier le périmètres exact de la mission proposée et passer à l'étape suivante de contractualisation.

Vis-à-vis des processus de rapprochement de l'art antérieur, on indique que les processus précités ne font que rechercher le métier de **Directeur Artistique** par investigation menée sur la seule base de données d'offres de services selon le tableau B précédemment introduit.

On indique que dans une telle situation une telle recherche n'apporte aucune réponse si ce n'est une réponse de silence.

- Recherche sur un résultat à fournir

Le procédé objet de la présente invention et en particulier, le processus de rapprochement permet, en cas d'échec sur une recherche de décomposer une demande de service en sous-demandes, lesquelles peuvent être engagées dans le processus de rapprochement.

L'exemple ci-après concerne, dans le cadre d'une redéfinition de l'identité visuelle de son entreprise, la situation selon laquelle un demandeur souhaite la création d'un personnage tridimensionnel, personnage 3D, lequel est susceptible de servir de mascotte et de logo d'identification des services fournis par son entreprise.

Le demandeur sélectionne la demande suivante : **Conception/Réalisation Personnage 3D.**

N'ayant pas de connaissance dans le domaine correspondant, le demandeur ne sait pas identifier un métier pour réaliser un tel travail.

La demande de service précitée est alors formalisée au travers de l'interface homme/machine et permet de fournir les critères de recherche ci-après selon le tableau E :

---

## Tableau E

### Résultat à fournir : Conception/réalisationPersonnage 3D

---

Le processus de rapprochement et, en particulier d'unification successive entre la demande de service et les offres de services constitutifs du domaine d'activité correspondant permet de trouver les différentes stratégies susceptibles de donner le résultat recherché.

Le parcours des règles d'ontologie selon le tableau A, c'est-à-dire la recherche du résultat **Conception/Réalisation Personnage 3D** et l'utilisation des relations "Se Décompose" et "Fait Appel" fournit alors deux solutions :

- soit : un **Infographiste 3D** ayant une compétence créativité experte ;
- soit une décomposition en trois sous-résultats, le premier permettant de définir le style et l'univers graphique du personnage (métier cible : **Graphiste**), le second permettant de constituer une maquette intermédiaire du personnage (métier cible : **Maquettiste**), le troisième permettant de réaliser le modelage, le texturage et l'animation du personnage (métier cible : **Infographiste 3D**).

Le processus de rapprochement utilise la première stratégie : la recherche d'un **Infographiste 3D** ayant une compétence de créativité experte.

Un tel profil n'est pas disponible sur la base de données d'offres de services, selon le tableau B.

Le processus de rapprochement déclenche alors la deuxième stratégie en faisant appel à un rapprochement sur les métiers nécessaires pour obtenir chacun des sous-résultats relatifs aux métiers de **Graphiste, Maquettiste, Infographiste 3D.**

La recherche est maintenant effectuée sur la base des offres de services selon le tableau D.

En raison du fait qu'il s'agit d'une recherche sur le métier, la même démarche que celle utilisée dans le cas du premier exemple est utilisée.

Pour chacun des trois métiers recherchés le processus de rapprochement par unification successive, si ce dernier permet de trouver plusieurs prestataires de services pour un métier, calcule alors l'indice de rapprochement pour classer ces derniers.

Le processus d'unification successive fournit alors la réponse suivante pour la prestation demandée : Conception/Réalisation Personnage 3D selon le tableau F.

---

## Tableau F

### Résultat à fournir : Conception/réalisationPersonnage 3D

---

On comprend ainsi que le procédé objet de la présente invention et en particulier, le processus d'unification successive et d'interprétation, à partir des règles R de la base de connaissances ontologique, permet de décomposer un résultat en un ensemble de sous-résultats contribuant au résultat final, un tel processus n'étant aucunement mis en oeuvre par les mécanismes de rapprochement actuels connus de l'art antérieur.

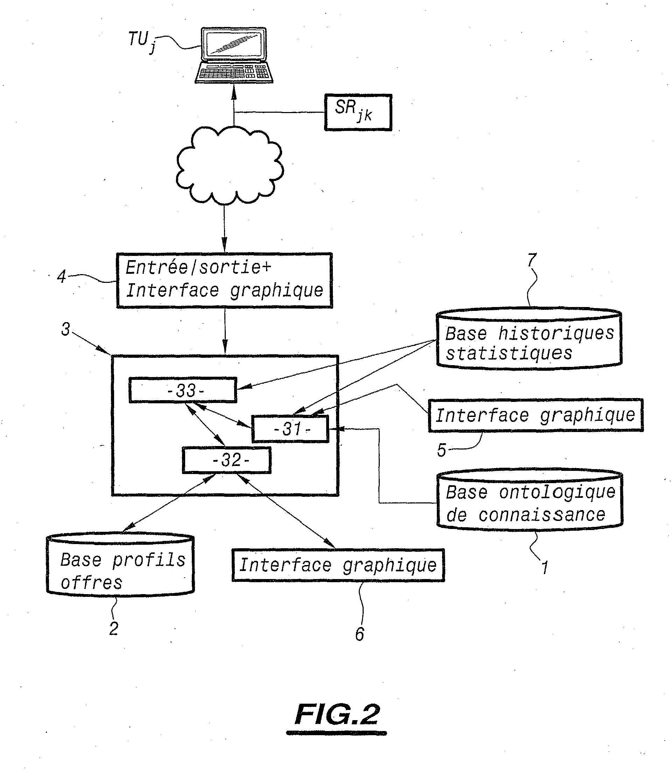

Une description plus détaillée d'un système de traitement automatique par rapprochement d'une demande de service et d'un ensemble d'offres de services fournies par des prestataires de services relatives à un domaine d'activité, ces offres de services étant fournies en ligne, sera maintenant donnée en liaison avec la figure2.

La demande de service et les offres de services sont établies chacune selon une description par codage multicritère d'entités codées, ainsi que décrit précédemment dans la description.

En référence à la figure 2, on indique que le système objet de l'invention comprend une base de connaissances ontologique référencée 1 relative à une pluralité d'offres de services $SO_{ik}$, cette base de connaissances ontologique comportant au moins un ensemble de relations de proximité R et/ou de décomposition applicables entre entités codées.

Le système représenté en figure 2 comporte en outre une base de données des offres de services comportant la référence 2, ces offres de services étant fournies par les prestataires de services et relatives à un ou plusieurs domaines d'activité, les domaines d'activité étant représentés par l'indice d'adresse k précédemment mentionné dans la description.

Enfin, le système objet de la présente invention comporte une unité de traitement par unification successive de la demande de service $SR_{jk}$ émise par tout utilisateur/demandeur, cette demande de service étant émise à partir d'un terminal utilisateur $TU_j$ tel que représenté sur la figure 2.

L'unité de traitement 3 réalise un traitement par unification successive de la demande de service et de l'ensemble des offres de services relatives au même domaine d'activité considéré. Elle permet d'établir la liste de réponses d'offres de services hiérarchisées selon un indice de rapprochement $IR_{ik}$ précédemment décrit dans la description. Cet indice de rapprochement est représentatif de la pertinence de chaque offre de service vis-à-vis de la demande de service $SR_{jk}$ émise précédemment.

Dans un mode de mise en oeuvre particulièrement avantageux, le système objet de l'invention, ainsi que représenté par exemple en figure 2, peut être conçu par une architecture en réseau, la base de connaissances ontologique 1, la base de données 2 étant interconnectées en réseau et l'unité de traitement 3 par unification étant alors constituée par un serveur dédié accessible par tout terminal utilisateur $TU_j$ connecté au réseau précité.

On comprend, en particulier, que la connexion en réseau s'entend de la connexion de chaque terminal utilisateur en réseau étendu, que l'interconnexion entre la base de connaissances ontologique 1, la base de données d'offres de services 2 et l'unité de traitement 3 peut être réalisée soit en réseau local, soit au contraire en réseau étendu, le cas échéant. La demande de service $SR_{jk}$ est alors émise à partir d'un message de requête de demande de service transmis du terminal utilisateur au serveur dédié.

La liste de réponse d'offres de services hiérarchisées selon un indice de rapprochement est transmise du serveur dédié constitué par unité 3 de traitement par unification vers le terminal utilisateur $TU_j$ auteur du message de requête de demande de service.

Ainsi que représenté en outre sur la figure 2, on indique que l'unité 3 de traitement par unification comprend au moins un premier module 31 de chargement à partir de la base de connaissances ontologique 1 sur réception d'un message de demande de service relative à un domaine d'activité k et à l'ensemble des relations de proximité et/ou de décomposition applicable entre entités codées relatives au domaine d'activité.

L'unité 3 de traitement comporte en outre un deuxième module 2 de chargement à partir de la base de données 2 des offres de services $SO_{ik}$ sur réception du message de demande de service $SR_{jk}$, le chargement concernant bien entendu l'ensemble des offres de services relatives au domaine d'activité de référence ou adresse k.

Enfin, un module 3 de traitement par unification est prévu, lequel est connecté aux premier et deuxième modules de chargement 31 et 32 et à un circuit d'interface d'entrée/sortie de l'unité de traitement par unification 3. On comprend en particulier que l'unité 3 de traitement peut être interconnectée à tout circuit d'entrée/sortie muni d'une interface graphique par exemple portant la référence 4 sur la figure 2.

Le mode opératoire du système objet de la présente invention est celui d'un serveur dédié faisant appel à une base de connaissances ontologique 1 et à une base de données d'offres de service 2. En outre, une base historique de statistiques portant la référence 7 peut être prévue et les base de données 2 et base ontologique de connaissances peuvent être munies d'une interface graphique 6, par exemple.

Quelques indications de mise en oeuvre seront en outre données relativement au service destiné à chaque prestataire de services. Tout prestataire ou offreur de services peut construire ses offres de services, c'est-à-dire son profil, en décrivant ses compétences et son expérience professionnelle de manière précise.

Une partie de cette description respecte par exemple les spécifications de standardisation professionnelle HR-XML consortium. Ceci permet, le cas échéant, au processus d'unification et le rapprochement, de rechercher des compétences en émettant des requêtes soit vers d'autres services d'intermédiation, soit directement vers des professionnels qui publient leurs offres de services en respectant cette représentation. Ce processus permet la mise en oeuvre d'une fonction d'interopérabilité.

En outre, tout prestataire de services se voit offrir la possibilité de construire des offres de services ciblées qui lui permettent, à un instant donné, de ne montrer qu'un sous-ensemble de ses compétences, sous-ensemble qu'il veut mettre en pratique plus particulièrement lors de la réalisation de prestations.

Le prestataire de services peut ainsi restreindre, par exemple, les résultats qu'il est prêt à fournir et/ou les compétences qu'il propose.

Il peut définir plusieurs offres de services. Le processus de rapprochement n'exerce, dans un tel cas, son filtrage que sur des offres de services définies par l'offreur et non sur son offre globale.

A titre d'exemple non limitatif, dans le domaine des langages de programmation, le prestataire de services, c'est-à-dire le développeur, par exemple, procède dans son offre globale des compétences en langage C++Expert et en langage Java confirmé.

S'il décide de ne plus accepter de mission nécessitant l'utilisation du langage C++ par exemple, il est alors en mesure de construire une offre de services qui ne contient, comme compétence de langage de programmation, que le langage Java.

En outre, lors de la saisie d'une offre de services, c'est-à-dire d'un profil, le prestataire de services peut se voir proposer l'accès à divers services à valeur ajoutée, comme par exemple un assistant de saisie et différents outils de conseil, tels que la possibilité d'analyse de l'offre suivant différents critères comprenant, à titre d'exemple, la cohérence entre le métier proposé et les compétences exprimées, l'adéquation du prix au contexte du marché visé, l'adéquation de l'offre et de la demande dans le contexte courant, etc.

Enfin, le procédé de rapprochement conforme à l'objet de la présente invention, lequel se base pour une part sur des règles d'une base de connaissances ontologique, permet d'améliorer la qualité globale du rapprochement dans le temps en améliorant les bases de connaissances par un mécanisme d'apprentissage automatique, par exemple.

Un tel apprentissage peut, pour une part, être réalisé à partir de bases historiques et statistiques portant la référence 7 sur la figure 2, ce type de base de données pouvant être constitué progressivement, grâce à l'application d'outils spécifiques permettant de créer des nouvelles connaissances par affinement du processus d'ontologie et l'introduction de nouveaux concepts.

## Revendications

1. Procédé de rapprochement automatique d'une demande de service et d'un ensemble d'offres de services fournies par des prestataires de services relatifs à un domaine d'activité, la demande de service et les offres de services étant établies chacune selon une description par codage multicritère d'entités codées, **caractérisé en ce qu'**il consiste :

   - à établir une base de connaissances ontologique du domaine d'activité relative à l'ensemble des offres de services dudit domaine d'activité, ladite base de connaissances ontologique comportant au moins un ensemble de relations de proximité et/ou de décomposition applicables entre entités codées ;
   - à établir une base de données des offres de services relatives audit domaine d'activité ;
   - à exécuter, à partir de ladite base de connaissances ontologique et de ladite base de données des offres de services un processus d'unification successive de ladite demande de service et de l'ensemble desdites offres de services relatives audit domaine d'activité, pour établir une liste de réponse d'offres de services hiérarchisées selon un indice de rapprochement de ladite demande de service et desdites offres de services, ledit indice de rapprochement étant représentatif de la pertinence de chaque offre de services vis-à-vis de ladite demande de service.

2. Procédé selon la revendication 1, **caractérisé en ce que** ledit processus d'unification successive consiste :

   - à établir l'ensemble des entités codées constitutives de chacune des offres de service du domaine d'activité sous forme d'un graphe ;
   - à parcourir ledit graphe selon une stratégie de parcours et à interpréter les entités codées respectives de ladite demande de service et de l'offre de service correspondante à partir de l'ensemble des relations de proximité et/ou de décomposition de ladite base de connaissances ontologique.

3. Procédé selon la revendication 2, **caractérisé en ce que** l'opération consistant à interpréter consiste :

   - à comparer des entités codées respectives de la demande de service respectivement de chaque offre de services exprimée ou déduite à partir de ladite base de connaissances ontologique ;
   - à filtrer les résultats de comparaison desdites entités codées respectives à partir de contraintes environnementales, de disponibilité de ressources, de contexte.

4. Procédé selon la revendication 2 ou 3, **caractérisé en ce que** celui-ci consiste en outre à réitérer ledit processus d'unification successive sur au moins un domaine d'activité voisin à partir de ladite base de connaissances ontologique dudit domaine d'activité.

5. Procédé selon l'une des revendications 1 à 4, **caractérisé en ce que** ledit ensemble de relations affecté à ladite base de connaissances ontologique comprend un ensemble de relations pondérées de proximité.

6. Procédé selon l'une des revendications 1 à 5, **caractérisé en ce que** ledit ensemble de relations affectées à ladite base de connaissances ontologique comprend un ensemble de relations pondérées de dépendance.

7. Procédé selon l'une des revendications 5 ou 6, **caractérisé en ce que** ledit ensemble de relations pondérées de proximité comprend au moins :

- une relation sémantique "Est proche de" permettant d'établir le caractère fonctionnel voisin de deux entités codées ;
- un indice de proximité représentatif du niveau de proximité de deux entités codées mises en relation par ladite relation sémantique.

**8.** Procédé selon l'une des revendications 5 à 7, **caractérisé en ce que** ledit ensemble de relations pondérées de dépendance comprend au moins les relations sémantiques :

"Se décompose" permettant d'établir un lien de causalité fonctionnelle descendante entre deux entités codées ;
"Fait appel" permettant d'établir un lien de causalité fonctionnelle ascendante entre deux entités codées ;
"Nécessite" permettant d'établir un lien de causalité fonctionnelle ascendante impérative entre deux entités codées.

**9.** Procédé selon l'une des revendications 5 à 8, **caractérisé en ce que** ledit ensemble de relations pondérées de proximité et ledit ensemble de relations pondérées de dépendance sont applicables entre domaines d'activité.

**10.** Procédé selon l'une des revendications 5 à 9, **caractérisé en ce que** ledit ensemble de relations pondérées de proximité et ledit ensemble de relations pondérées de dépendance sont applicables entre entités codées de domaines d'activité différents.

**11.** Procédé selon l'une des revendications 1 à 10, **caractérisé en ce que** lesdites demande de service et offres de services sont constituées par des entités codées hiérarchisées comprenant au moins :

- une entité codée représentative d'un type d'activité dans le domaine ;
- une entité codée représentative d'une aptitude d'exercice dudit type d'activité ;
- une entité codée représentative d'un niveau de maîtrise dans l'exercice dudit type d'activité.

**12.** Procédé selon la revendication 11, **caractérisé en ce que** lesdites demandes de service et offres de services comprennent au moins :

- une entité codée, représentative d'un type d'activité ou d'un type d'objectif dans le domaine d'activité ; et/ou
- une entité codée représentative d'une aptitude d'exercice d'une ou de plusieurs activités du domaine d'activité, ou dudit type d'activité si présente, ou représentative d'une aptitude à atteindre un ou plusieurs objectifs du domaine ou dudit type d'objectif à atteindre si présent,
- si une entité représentative d'un type d'activité dans le domaine d'activité est présente alors lui est associée une entité codée représentative d'un niveau de maîtrise dans l'exercice du type d'activité.
- si une entité codée représentative d'une aptitude d'exercice d'une ou de plusieurs activités du domaine d'activité est présente lui est associée une entité représentative du niveau de maîtrise de cette aptitude.

**13.** Système de traitement automatique par rapprochement d'une demande de service et d'un ensemble d'offres de services fournies par des prestataires de services relatifs à un domaine d'activité, la demande de service et les offres de services étant établies chacune selon une description par codage multicritère d'entités codées, **caractérisé en ce qu'**il comporte au moins :

- une base de connaissances ontologique relative à une pluralité d'offres de services représentatives d'une pluralité de domaines d'activité, ladite base de connaissances ontologique comportant au moins un ensemble de relations de proximité et/ou de décomposition applicables entre entités codées ;
- une base de données des offres de services fournies par des prestataires de services relatifs à un ou plusieurs domaines d'activité ;
- une unité de traitement par unification successive de ladite demande de service et de l'ensemble des offres de services relatives à un même domaine d'activité, pour établir une liste de réponse d'offres de services hiérarchisées selon un indice de rapprochement de ladite demande de service et desdites offres de services, ledit indice de rapprochement étant représentatif de la pertinence de chaque offre de services vis-à-vis de ladite demande de service.

**14.** Système selon la revendication 13, **caractérisé en ce que** ladite unité de traitement par unification, ladite base de connaissances ontologique et ladite base de données sont interconnectées en réseau, ladite unité de traitement par unification étant constituée en un serveur dédié accessible par tout terminal utilisateur connecté audit réseau, à partir d'un message de requête de demande de service, transmis dudit terminal utilisateur audit serveur dédié, la liste de réponse d'offres de services hiérarchisées selon un indice de rapprochement étant transmise dudit serveur dédié audit terminal utilisateur auteur de message de requête de demande de service.

**15.** Système selon l'une des revendications 13 ou 14, **caractérisé en ce que** ladite unité de traitement par unification comprend au moins :

- un premier module de chargement à partir de ladite base de connaissances ontologique, sur réception d'un message de demande de service relative à un domaine d'activité, de l'ensemble des relations de proximité et/ou de décomposition applicables entre entités codées relatives audit domaine d'activité ;
- un deuxième module de chargement à partir de ladite base de données des offres de services, sur réception dudit message de demande de service, de l'ensemble des offres de services relatives audit domaine d'activité ;
- un module de traitement par unification connecté aux premier et deuxième module de chargement et à un circuit d'interface d'entrée/sortie de ladite unité de traitement par unification.

**_FIG.1A_**

**_FIG.1B_**

$$SR_{jk} = \{FD_{jkl}\}_{l=1}^{l=D}$$

$$SO_{ik} = \{FO_{ikm}\}_{m=1}^{m=0} \qquad C_{20}$$

$$C_{210}$$

$$C_{201}$$

$$l = l+1$$

$$FD_{jkl} \overset{R}{\cong} FO_{jkm} \qquad C_{21}$$

$$i = i+1$$

$$C_{27} \qquad \begin{array}{c} k=k' \\ pour\ SO_{ik} \end{array}$$

$$\{Cp_{ikl}\}_{l=1}^{l=2} \qquad C_{22}$$

$$Filtrage \qquad C_{23}$$

$$\{IR_{ik}\}_{i=1}^{i=N} \qquad C_{24}$$

$$C_{26}$$

$$Fin \qquad - \qquad \begin{array}{c} Changement \\ domaine\ k? \end{array} \qquad + \qquad C_{25}$$

## FIG.1C

*TU_j*

*SR_jk*

4 — Entrée/sortie+
Interface graphique

3

-33-

-31-

-32-

7

Base historiques
statistiques

Interface graphique

5

Base ontologique
de connaissance

1

Base profils
offres

2

Interface graphique

6

**FIG.2**

**Office européen**

**des brevets**

**DECLARATION**

qui selon la règle 45 de la Convention sur le brevet européen est considerée, aux fins de la procédure ultérieure, comme le rapport de la recherche européenne

Numéro de la demande

EP 04 29 0464

| La division de la recherche estime que la présente demande de brevet n'est pas conforme aux dispositions de la CBE au point qu'une recherche significative sur l'état de la technique ne peut être effectuée au regard de toutes les revendications | CLASSEMENT DE LA DEMANDE (Int.Cl.7) |
|---|---|
| Raison : | G06F17/60 |

Une recherche significative n'est pas possible au regard des toutes les revendications parce que celles-ci ont trait à PI - Plan, principe et méthode dans le domaine des activités économiques - Art. L.611-10(2)(c) CPI

L'attention du déposant est attirée sur le fait que, suite à une déclaration conformément â? la Règle 45 CBE, une recherche pourrait être effectuée pendant la phase d'examen, à condition que les problèmes ayant conduit à cette déclaration de non-recherche ou de recherche incomplète aient été résolus (voir Directives OEB C-VI, 8.5).
-----

EPO FORM 1504 (P04C38)

| Lieu de la recherche | Date | Examinateur |
|---|---|---|
| Munich | 9 juillet 2004 | Mennerun, S |